# EUROPEAN PATENT APPLICATION

(11) **EP 2 189 687 A1**
(43) Date of publication of application: **26.05.2010**
(21) Application number: 09176415.9
(22) Date of filing: 18.11.2009
(51) Int. Cl.: F16J 15/08, F16L 19/02

(54) **Metal-to-metal seal utilizing a flanged pinch-off tube and related apparatus and method**

(30) Priority: 25.11.2008 US 323110
(71) Applicant: Honeywell International Inc., Morristown, NJ 07962 (US)
(72) Inventor: Cole, Barrett E., Bloomington, MN 55431 (US); Schwichtenberg, Jay Gordon, New Hope, MN 55418 (US)
(74) Representative: Buckley, Guy Julian

(57) **Abstract**

An apparatus includes a manifold (110) having a passageway (130) through the manifold and a seal fitting extension (140). The seal fitting extension includes a shoulder portion (150) having a metal seal ring (160). The apparatus also includes a pinch-off tube (120) having a flange (170) in sealed contact with the metal seal ring of the shoulder portion of the manifold. The apparatus could further include a backing element (180) in contact with the flange of the pinch-off tube, where the backing element forces the flange into contact with the metal seal ring. In addition, the apparatus could include a sealing nut (190) in contact with the backing element, where the sealing nut causes the backing element to force the flange into contact with the metal seal ring.

## Description

### TECHNICAL FIELD

This disclosure is directed generally to vacuum seal technology and, in particular, to a metal-to-metal seal that utilizes a flanged pinch-off tube and related apparatus and method.

### BACKGROUND

In the operation of vacuum seal devices, it is common to connect a pinch-off tube to a fill manifold. A fill manifold typically includes a body that has portions forming a cylindrical passageway through the body of the fill manifold. The body of the fill manifold also typically has a cylindrical annular flange.

Conventional techniques typically attach the pinch-off tube to the seal fitting extension of the fill manifold by welding a sealing flange onto the pinch-off tube. The welded sealing flange of the pinch-off tube is then attached to the cylindrical annular flange of the fill manifold. However, the welded sealing flange has the disadvantage that it can only be used once. Moreover, welding the sealing flange to the pinch-off tube may be relatively expensive, increasing the cost of conventional vacuum seal devices.

### SUMMARY

This disclosure provides a metal-to-metal seal that utilizes a flanged pinch-off tube and related apparatus and method.

In a first embodiment, a seal assembly includes a manifold having a passageway through the manifold and a seal fitting extension. The seal fitting extension includes a shoulder portion, where the shoulder portion includes a metal seal ring on the shoulder portion.

In particular embodiments, the metal seal ring includes a ring structure located circumferentially around an exit of the passageway through the manifold. The metal seal ring could have a rounded edge.

In other particular embodiments, the seal assembly also includes a pinch-off tube having a flange in contact with the metal seal ring.

In yet other particular embodiments, the seal assembly also includes a backing element in contact with the flange of the pinch-off tube. The backing element forces the flange into contact with the metal seal ring. The backing element may include an aperture through the backing element, where the aperture is configured to receive the pinch-off tube.

In still other particular embodiments, the seal assembly also includes a sealing nut in contact with the backing element. The sealing nut causes the backing element to force the flange into contact with the metal seal ring. The sealing nut may include a first aperture configured to receive the backing element and a second aperture configured to receive the pinch-off tube. The sealing nut may also include first threads configured to engage second threads on the seal fitting extension.

In a second embodiment, an apparatus includes a manifold having a passageway through the manifold and a seal fitting extension. The seal fitting extension includes a shoulder portion having a metal seal ring. The apparatus also includes a pinch-off tube having a flange in sealed contact with the metal seal ring of the shoulder portion of the manifold.

In a third embodiment, a method includes providing a manifold and a pinch-off tube. The manifold includes a passageway through the manifold and a seal fitting extension, where the seal fitting extension includes a shoulder portion having a metal seal ring. The pinch-off tube includes a flange. The method also includes placing the flange in contact with the metal seal ring and forcing the flange into sealed contact with the metal seal ring.

Other technical features may be readily apparent to one skilled in the art from the following figures, descriptions, and claims.

### BRIEF DESCRIPTION OF THE DRAWINGS

For a more complete understanding of this disclosure and its advantages, reference is now made to the following descriptions taken in conjunction with the accompanying drawings, in which:

FIGURE 1 illustrates a perspective cross-sectional view of an example vacuum seal device according to this disclosure;

FIGURE 2 illustrates a cross-sectional view of a fill manifold and a pinch-off tube in the vacuum seal device according to this disclosure;

FIGURE 3 illustrates a more detailed cross-sectional view of the fill manifold and the pinch-off tube in the vacuum seal device according to this disclosure; and

FIGURE 4 illustrates an example method for forming a vacuum seal device using a fill manifold and a pinch-off tube according to this disclosure.

### DETAILED DESCRIPTION

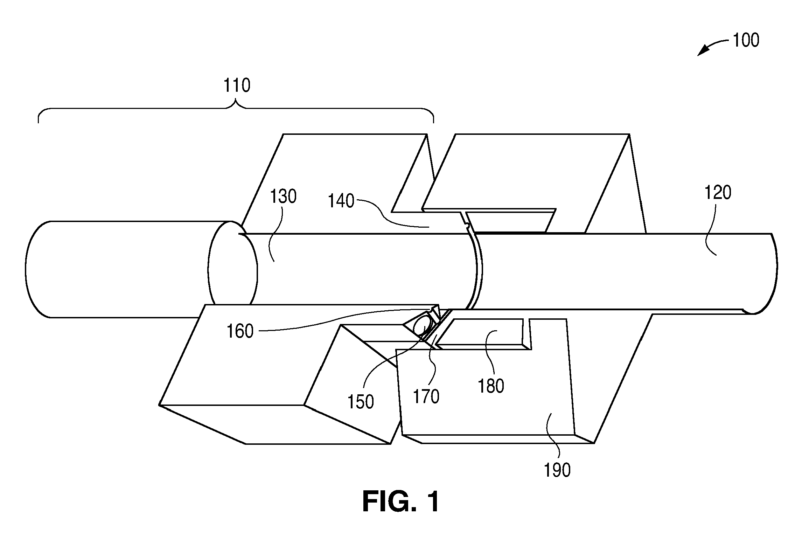

FIGURES 1 through 4 and the various embodiments used to describe the principles of the present invention in this patent document are by way of illustration only and should not be construed in any way to limit the scope of the invention. Those skilled in the art will understand that the principles of the invention may be implemented in any type of suitably arranged fill manifold.

FIGURE 1 illustrates a perspective cross-sectional view of an example vacuum seal device 100 according to this disclosure. In this example, the vacuum seal device 100 includes a fill manifold 110 and a cylindrical pinch-off tube 120. As shown in FIGURE 1, the fill manifold 110 includes portions that form a cylindrical passageway 130 through the body of the fill manifold 110. The fill manifold 110 also includes portions that form a seal fitting extension 140 around one end of the cylindrical passage 130.

The seal fitting extension 140 has portions that form a shoulder 150, which extends from an outer circumference of the seal fitting extension 140 to the edge of the cylindrical passageway 130. As shown in FIGURE 1, the shoulder 150 of the seal fitting extension 140 has portions that form a metal seal ring 160 around the circumference of the cylindrical passageway 130.

The cylindrical pinch-off tube 120 has portions that form a flange 170 around the end of the cylindrical pinch-off tube 120. To form a seal, the flange 170 is seated on the seal fitting extension 140 of the fill manifold 110. As shown in FIGURE 1, the flange 170 of the cylindrical pinch-off tube 120 is seated on the shoulder 150 of the seal fitting extension 140 when the cylindrical pinch-off tube 120 is placed into position in alignment with the cylindrical passageway 130 of the fill manifold 110.

When flange 170 is placed on the shoulder 150 of the seal fitting extension 140, the flange 170 rests on the metal seal ring 160 of the shoulder 150. The metal seal ring 160 is shown in FIGURE 1 as having a rounded edge, although other embodiments of the metal seal ring 160 could also be used. The metal seal ring 160 can have any other suitable shape, such as a knife edge or other similar structure.

A cylindrically shaped backing element 180 is provided that has portions forming an aperture for receiving the cylindrical pinch-off tube 120. A cylindrically shaped sealing nut 190 is also provided that has portions forming a first cylindrical aperture for receiving the backing element 180 and a second cylindrical aperture for receiving the cylindrical pinch-off tube 120.

As shown in FIGURE 1, the cylindrical pinch-off tube 120 is placed through the aperture of the backing element 180 and through the apertures of the sealing nut 190. The flange 170 of the cylindrical pinch-off tube 120 can then be placed into position against the metal seal ring 160 of the shoulder 150 of the fill manifold 110.

The backing element 180 pushes the flange 170 against the metal seal ring 160. An interior surface of the sealing nut 190 can include threads that engage threads on an exterior surface of the seal fitting extension 140. The two sets of threads can be engaged as the sealing nut 190 rotates around the seal fitting extension 140. As the sealing nut 190 is rotated, the advance of the sealing nut 190 causes the backing element 180 to force the flange 170 of the cylindrical pinch-off tube 120 against the metal seal ring 160 of the shoulder 150. The force from the backing element 180 against the flange 170 causes the flange 170 to deform against the metal seal ring 160. This causes the flange 170 to form a metal-to-metal seal with the metal seal ring 160.

When the device has been processed, the cylindrical pinch-off tube 120 is pinched to form a vacuum seal. The sealing nut 190 can be rotated in a reverse direction from the threads of the seal fitting extension 140 and removed. The backing element 180 can also be removed from the cylindrical pinch-off tube 120, and the flange 170 of the cylindrical pinch-off tube 120 can be discarded. At this point, the fill manifold 110 can be used in a subsequent sealing operation.

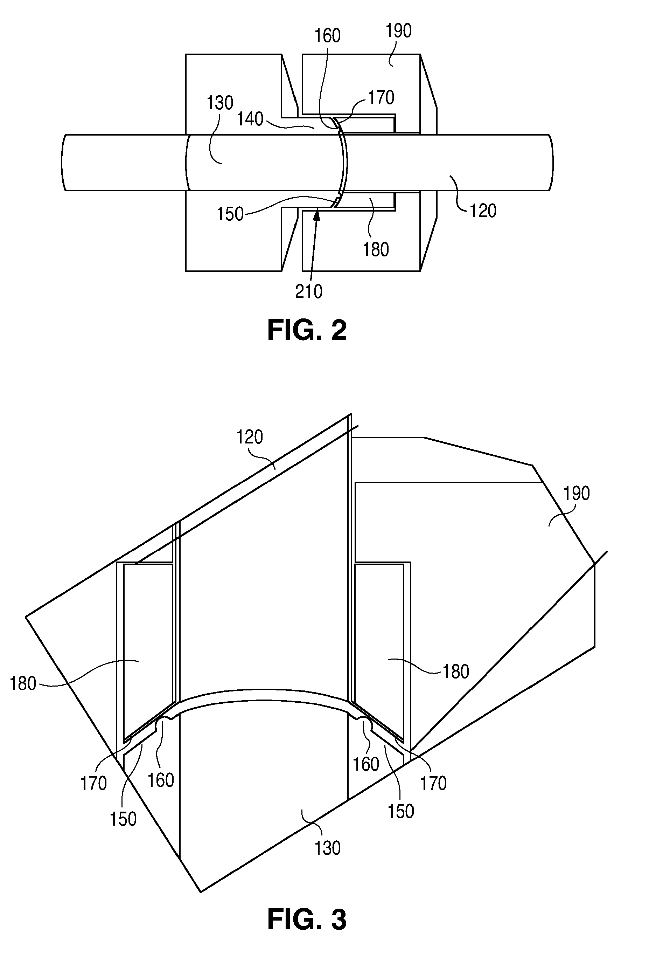

FIGURE 2 illustrates a cross-sectional view of a fill manifold 110 and a pinch-off tube 120 in the vacuum seal device 100 according to this disclosure. In particular, FIGURE 2 illustrates how the flange 170 of the pinch-off tube 120 is seated against the metal seal ring 160 of the shoulder 150 of the seal fitting extension 140. In this example, reference numeral 210 designates the location of the threads used to engage the sealing nut 190 to the seal fitting extension 140.

FIGURE 3 illustrates a more detailed cross-sectional view of the fill manifold 110 and the pinch-off tube 120 in the vacuum seal device 100 according to this disclosure. In particular, FIGURE 3 illustrates in more detail how the flange 170 of the pinch-off tube 120 is seated against the metal seal ring 160 of the shoulder 150 of the seal fitting extension 140.

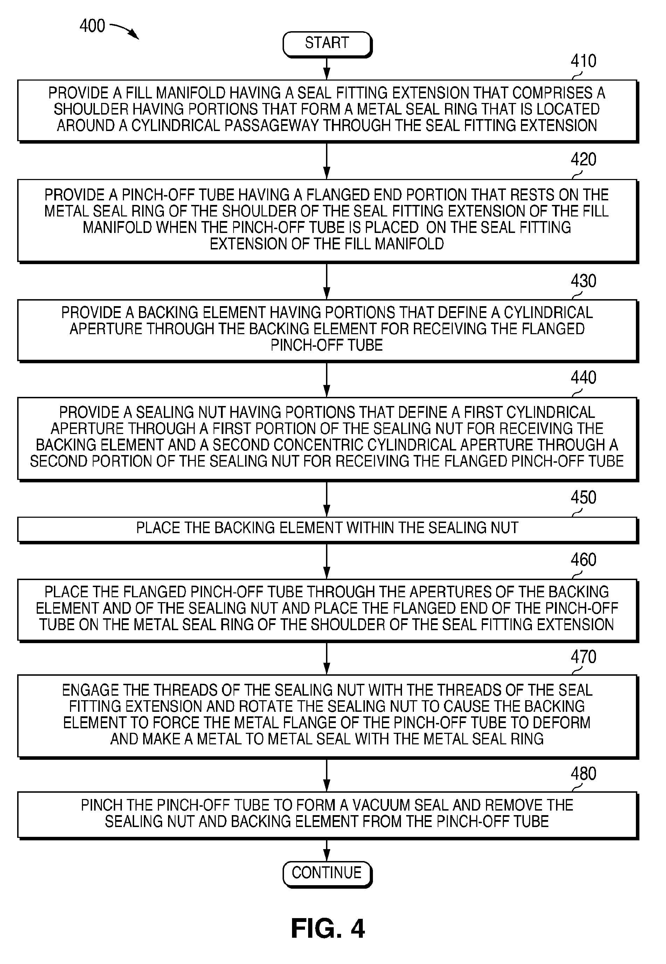

FIGURE 4 illustrates an example method 400 for forming a vacuum seal device using a fill manifold and a pinch-off tube according to this disclosure. A fill manifold 110 is provided at step 410. The fill manifold 110 includes a seal fitting extension 140 with a shoulder 150. The shoulder 150 has portions that form a metal seal ring 160 located around a cylindrical passageway 130 through the fill manifold 110.

A pinch-off tube 120 is provided and positioned at step 420. The pinch-off tube 120 includes a flanged end portion 170 that rests on the metal seal ring 160 of the fill manifold 110 when the pinch-off tube 120 is placed on the seal fitting extension 140 of the fill manifold 110.

A backing element 180 is provided at step 430. The backing element 180 has portions that define a cylindrical aperture for receiving the flanged pinch-off tube 120.

A sealing nut 190 is provided at step 440. The sealing nut 190 has portions that define a first cylindrical aperture through a first portion of the sealing nut 190 for receiving the backing element 180. The sealing nut 190 also has portions that define a second cylindrical aperture through a second portion of the sealing nut 190 for receiving the flanged pinch-off tube 120.

The backing element 180 is placed within the sealing nut 190 at step 450. The flanged pinch-off tube 120 is placed through the apertures of the backing element 180, and the sealing nut 190 and the flanged end 170 of the pinch-off tube 120 are placed on the metal seal ring 160 of the seal fitting extension 140 at step 460. Threads of the sealing nut 190 are engaged with threads of the seal fitting extension 140, and the sealing nut 190 is rotated to cause the backing element 180 to force the metal flange 170 to deform and make a metal-to-metal seal with the metal seal ring 160 at step 470. The pinch-off tube 120 is pinched to form a vacuum seal, and the sealing nut 190 and the backing element 180 are removed from the pinch-off tube 120 at step 480. The fill manifold 110 is now ready to be used in a subsequent sealing operation.

While FIGURES 1 through 4 have illustrated various features of example embodiments for the present invention, various changes may be made to the figures. For example, each of the various components of the vacuum seal device 100 could have any suitable size and shape. Also, while shown as a series of steps, various steps in FIGURE 4 could overlap, occur in parallel, occur multiple times, or occur in a different order.

It may be advantageous to set forth definitions of certain words and phrases used throughout this patent document. The terms "include" and "comprise," as well as derivatives thereof, mean inclusion without limitation. The term "or" is inclusive, meaning and/or. The phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like.

While this disclosure has described certain embodiments and generally associated methods, alterations and permutations of these embodiments and methods will be apparent to those skilled in the art. Accordingly, the above description of example embodiments does not define or constrain this disclosure. Other changes, substitutions, and alterations are also possible without departing from the spirit and scope of the invention, as defined by the following claims.

## Claims

1. A seal assembly comprising:
a manifold (110) comprising a passageway (130) through the manifold and a seal fitting extension (140);
wherein the seal fitting extension comprises a shoulder portion (150), the shoulder portion comprising a metal seal ring (160) on the shoulder portion.

2. The seal assembly of Claim 1, wherein the metal seal ring comprises a ring structure located circumferentially around an exit of the passageway through the manifold.

3. The seal assembly of Claim 1, further comprising:
a pinch-off tube (120) comprising a flange (170) in contact with the metal seal ring;
a backing element (180) in contact with the flange of the pinch-off tube, the backing element forcing the flange into contact with the metal seal ring; and
a sealing nut (190) in contact with the backing element, the sealing nut causing the backing element to force the flange into contact with the metal seal ring.

4. The seal assembly of Claim 3, wherein the backing element comprises an aperture through the backing element, the aperture configured to receive the pinch-off tube.

5. The seal assembly of Claim 3, wherein the sealing nut comprises:
a first aperture configured to receive the backing element; and
a second aperture configured to receive the pinch-off tube.

6. An apparatus comprising:
a manifold (110) comprising a passageway (130) through the manifold and a seal fitting extension (140), the seal fitting extension comprising a shoulder portion (150) having a metal seal ring (160); and
a pinch-off tube (120) comprising a flange (170) in sealed contact with the metal seal ring of the shoulder portion of the manifold.

7. The apparatus of Claim 6, further comprising:
a backing element (180) in contact with the flange of the pinch-off tube, the backing element forcing the flange into contact with the metal seal ring; and
a sealing nut (190) in contact with the backing element, the sealing nut causing the backing element to force the flange into contact with the metal seal ring.

8. The apparatus of Claim 7, wherein:
the backing element comprises an aperture through the backing element, the aperture configured to receive the pinch-off tube; and
the sealing nut comprises a first aperture configured to receive the backing element and a second aperture configured to receive the pinch-off tube.

9. A method comprising:
providing (410-420) a manifold (110) and a pinch-off tube (120), the manifold comprising a passageway (130) through the manifold and a seal fitting extension (140), the seal fitting extension comprising a shoulder portion (150) having a metal seal ring (160), the pinch-off tube comprising a flange (170);
placing (460) the flange in contact with the metal seal ring; and
forcing (470) the flange into sealed contact with the metal seal ring.

10. The method of Claim 9, wherein forcing the flange into sealed contact with the metal seal ring comprises deforming the metal flange of the pinch-off tube to make a metal-to-metal contact seal with the metal seal ring.
